# EUROPÄISCHE PATENTSCHRIFT

(11) **EP 0 822 343 B1**
(45) Veröffentlichungstag und Bekanntmachung des Hinweises auf die Patenterteilung: **25.06.2003**
(21) Anmeldenummer: 97112367.4
(22) Anmeldetag: 18.07.1997
(51) Int. Cl.: F15B 21/08, F15B 15/28, G05B 19/404, F15B 19/00, F16K 37/00

(54) **Stellungsregler sowie Regelventil mit einem derartigen Stellungsregler**
Position controller and a control valve with such a controller
Régulateur de position et vanne de régulation avec ce régulateur de position

(30) Priorität: 23.07.1996 DE 29612775 U
(43) Veröffentlichungstag der Anmeldung: 04.02.1998
(73) Patentinhaber: SIEMENS AKTIENGESELLSCHAFT, 80333 München (DE)
(72) Erfinder: Heer, Klaus-Peter, 76863 Herxheim (DE)

(56) Entgegenhaltungen:
- EP-A- 0 287 299
- EP-A- 0 637 713
- DE-A- 4 207 643
- US-A- 4 833 593

## Beschreibung

Die Erfindung betrifft ein Verfahren zur Beurteilung des Verschleißgrades einer Ventildichtung nach dem Oberbegriff des Anspruchs 1.

Aus der Druckschrift "Elektropneumatische Stellungsregler für optimale Reglerergebnisse", Bestellnummer E80001-V0343-A020, der Siemens AG ist der elektropneumatische Stellungsregler SIPART PS bekannt. Er wird eingesetzt, um an pneumatischen Schub- oder Schwenkantrieben die Position eines angeschlossenen Stellgliedes, beispielsweise eine Ventil- oder Klappenstellung, zu regeln. Von einem Prozeßregler- oder -leitsystem wird dem Stellungsregler über eine Schnittstelle, beispielsweise eine digitale Profibus-Anschaltung oder einen analogen 4 - 20 mA-Eingang, ein Sollwert vorgegeben, und der Stellungsregler erzwingt am Antrieb dann eine diesem Sollwert entsprechende Stellung. Der Druck in einer Antriebskammer oder bei doppeltwirkenden Antrieben in beiden Antriebskammern wird so lange verändert, bis die vorgegebene Position des Stellglieds erreicht ist. Dazu wird die aktuelle Position mit einem Weggeber, beispielsweise einem Leitplastik-Potentiometer, erfaßt und ein mit dem Weggeber erzeugtes Istwertsignal zusammen mit dem Sollwert einem Mikrocontroller zugeführt. Dieser vergleicht beide Signale, bildet eine Regelabweichung und berechnet unter Berücksichtigung der Dynamik des pneumatischen Antriebs die erforderlichen Schaltreaktionen nachgeschalteter pneumatischer Ventile. Ein Ventil liegt im Zuluftzweig für eine Erhöhung des Luftdrucks in der Kammer, ein anderes Ventil im Abluftzweig und öffnet, wenn die Kammer entlüftet werden soll. Die Inbetriebnahme des Stellungsreglers an einem Antrieb erfolgt automatisch. Nachdem der Stellungsregler am Antrieb montiert ist, wird durch eine Tastenbedienung ein vollautomatischer Initialisierungsprozeß eingeleitet. Der Stellungsregler fährt den Antrieb in die Endlagen, wobei der exakte Nullpunkt und Hubbereich ermittelt werden und eine Normierung des Verfahrweges auf 0 bis 100 % erfolgt.

Bei Regelventilen wird häufig gefordert, daß im geschlossenen Zustand keine Leckströme fließen, d. h., daß das Regelventil dicht schließt. Dabei spielt die Beschaffenheit des Ventilsitzes eine entscheidende Rolle. Ist ein Ventilsitz durch häufiges Schließen ausgeschlagen oder im Falle einer Weichdichtung durch das ständige Pressen im geschlossenen Zustand verformt, so kann eine Dichtheit bei geschlossenem Ventil nicht mehr gewährleistet werden. Bei einem Ventil, das in eine prozeßtechnische Anlage eingebaut ist, kann diese auch nicht ohne weiteres gemessen werden, da die Empfindlichkeit eines in der betreffenden Prozeßleitung befindlichen Durchflußmeßumformers in der Regel nicht ausreicht, Leckströme zu ermitteln. Im Rahmen von Wartungsarbeiten werden deshalb die Ventile in regelmäßigen Abständen aus der Anlage entfernt und in einer Wartungswerkstatt mit neuen Ventilsitzen oder neuen Weichdichtungen versehen. Dabei werden viele Ventile vorsorglich überarbeitet, obwohl sie eigentlich störungsfrei sind.

Aus der EP 0 637 713 A1 ist ein Verfahren zum Betreiben eines Stellungsreglers für einen Ventilantrieb bekannt. Zur Überwachung von zu großer Reibung und der Funktionstüchtigkeit des pneumatischen Ventilantriebs wird vor Inbetriebnahme unter praxisnahen Bedingungen eine Grundkennlinie einschließlich einer Umkehrspanne und einer Hysterese ermittelt, indem in Abhängigkeit von einem Eingangssignal x der Stellweg, das heißt der Hub des Antriebes, aufgenommen und abgespeichert wird. Bei einer Überschreitung einer maximalen Hysterese oder einer normalen Umkehrspanne wird auf eine erhöhte Reibung, beispielsweise durch eine zu fest angezogene Stopfbuchse, geschlossen.

Aus der EP 0 287 299 A2 ist ein mikroprozessorbasiertes Steuer- und Diagnosesystem für motorbetriebene Ventile bekannt.

Der Erfindung liegt die Aufgabe zugrunde, ein Verfahren zum Betreiben eines Stellungsreglers zu finden, mit dem eine Qualitätsaussage über ein Stellglied, insbesondere ein Ventil, gewonnen werden kann, ohne daß dieses aus der prozeßtechnischen Anlage entfernt werden muß.

Zur Lösung dieser Aufgabe weist das neue Verfahren zur Beurteilung des Verschleißgrades einer Ventildichtung der eingangs genannten Art die im kennzeichnenden Teil des Anspruchs angegebenen Merkmale auf.

Die Erfindung hat den Vorteil, daß Stellglieder on-line, d. h. wenn sie in einer prozeßtechnischen Anlage eingebaut sind, beurteilt werden können. Ein Ausbau und eine Wartung eines Stellgliedes muß nur noch dann vorgenommen werden, wenn ein vorgebbares Qualitätskriterium nicht mehr erfüllt ist. Erhebliche Kosten, die insbesondere bei Regelventilen durch den vorsorglichen Austausch der Ventilsitze oder Weichdichtungen bisher entstanden sind, können entfallen, da nur noch diejenigen Ventile gewartet werden, deren Verschleißgrad eine vorgebbare Grenze überschreitet. Dabei wird in vorteilhafter Weise ausgenutzt, daß der Verschleißgrad eines Ventilsitzes oder einer Weichdichtung eine direkte Abhängigkeit von der Verschiebung des Schließpunktes von seiner ursprünglichen Lage zeigt. Die Endlage, auch Nullstellung genannt, durch die der Verfahrweg des Ventilantriebs begrenzt wird, verschiebt sich bei erhöhtem Verschleiß zunehmend in Schließrichtung.

Ursachen hierfür können sein, daß der Ventilsitz im Laufe der Zeit immer mehr ausgeschlagen, die Weichdichtung zusammengepreßt oder durch Cavitation oder Abrieb ausgewaschen werden. Je nach Sicherheitsanforderungen und vorgesehenem Abstand zwischen Wartungsarbeiten können durch den Anwender Grenzwerte für zulässige Verschiebungen der Endlagen vorgegeben werden, so daß individuell entschieden werden kann, wann ein Ventilsitz bzw. eine Weichdichtung getauscht werden muß. Regelmäßige Wartungsarbeiten müssen nur noch an den Ventilen ausgeführt werden, bei denen bis zum nächsten Wartungsintervall mit einem Ausfall zu rechnen ist.

Anhand der Zeichnungen, in denen ein Ausführungsbeispiel der Erfindung dargestellt ist, werden im folgenden die Erfindung sowie Ausgestaltungen und Vorteile näher erläutert.

Es zeigen:
- Figur 1: ein Blockschaltbild eines Regelventils mit Stellungsregler und
- Figur 2: den durch einen Stellungsmelder erfaßbaren Verfahrweg.

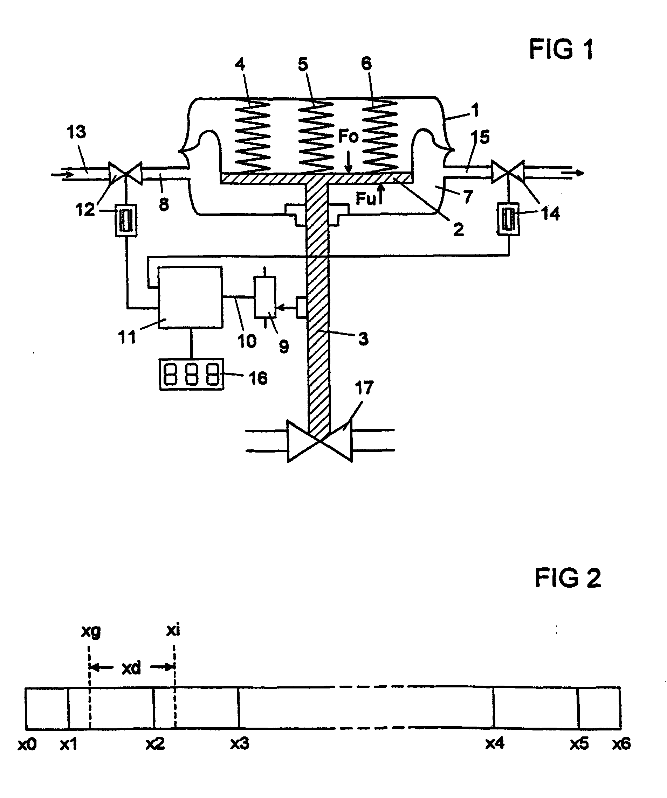

Ein pneumatischer Antrieb weist ein Antriebsgehäuse 1 auf, in dem ein Antriebselement, hier ein Membranteller 2, beweglich gelagert ist. Das Antriebselement 2 ist mit einer Schubstange 3 verbunden, die zur Betätigung eines Stellglieds 17, hier ein Stellventil, dient. Auf der Oberseite des Membrantellers 2 befinden sich innerhalb des Antriebsgehäuses 1 drei Federn 4, 5 und 6, die auf den Membranteller 2 eine Druckkraft Fo ausüben. Die Unterseite des Membrantellers 2 bildet zusammen mit dem Unterteil des Antriebsgehäuses 1 eine Druckkammer 7, die über eine Zuleitung 8 be- und über eine Ableitung 15 entlüftet werden kann. In Abhängigkeit von dem in der Druckkammer 7 herrschenden Druck wirkt eine Kraft Fu auf die Unterseite des Membrantellers 2. Zur Erfassung der aktuellen Position der Schubstange 3 ist ein Stellungsmelder 9 vorgesehen, der über einen Stellungsabgriff mit der Schubstange 3 gekoppelt ist und ein elektrisch auswertbares Stellungssignal 10 an einen Stellungsregler 11 liefert. Zur Betätigung des pneumatischen Antriebs öffnet oder schließt der Stellungsregler 11 ein Piezoventil 12, das auf der einen Seite mit einer Leitung 13 eines Druckluftversorgungsnetzes und dessen andere Seite mit der Zuleitung 8 verbunden ist. Zur schnellen Entlüftung ist ein Ventil 14 vorgesehen, das die Ableitung 15 zur Umgebung hin öffnet oder schließt. An den Stellungsregler 11 ist eine Anzeige 16 angeschlossen, die zur Ausgabe aktueller Stellungswerte sowie einer Qualitätsaussage dient. Zusätzlich kann die Qualitätsaussage über eine Busschnittstelle, die in Figur 1 nicht dargestellt ist, einem übergeordneten Prozeßleitsystem angezeigt werden. Der Verfahrweg des Ventils 17 ist durch zumindest eine Endlage, die Schließstellung, begrenzt.

Anhand Figur 2 soll im folgenden dargestellt werden, wie der Verfahrweg durch eine geeignete Anbringung des Stellungsabgriffs an der Schubstange 3 auf den Bereich abgebildet werden kann, in dem der Stellungsmelder 9 ein auswertbares Stellungssignal 10 liefert. Dieser Bereich erstreckt sich von einer Position x0 bis zu einer Position x6, die bei korrekter Montage des Stellungsabgriffs nie erreicht werden. Der Stellungsabgriff wird so an der Schubstange 3 angebracht, daß ein ursprünglicher Schließpunkt bei der Inbetriebnahme des Regelventils zwischen den Toleranzgrenzen x2 und x3, also innerhalb eines Nullwerttoleranzbandes zu liegen kommt. In dem gezeigten Ausführungsbeispiel liegt der ursprüngliche Schließpunkt an der Position xi. Das bei der Inbetriebnahme ermittelte Stellungssignal bei der Position xi wird als Referenzwert abgespeichert. Zum Meßbereichsende hin ist zusätzlich eine Verschleißzone zwischen den Positionen x1 und x2 vorgesehen, in welche der Schließpunkt beim späteren Betrieb des Regelventils aufgrund des Verschleißes der Ventilabdichtung wandern kann. Diese Verschleißzone hat mindestens eine Breite, die der maximal zulässigen Abweichung eines späteren Schließpunkts von dem bei der Inbetriebnahme ermittelten Referenzwert entspricht. Diese ist individuell durch den Anwender vorgebbar. Der Bereich zwischen den Positionen x0 und x1 ist als Toleranzband zum Ausgleich von Montageungenauigkeiten vorgesehen. An der Position xg befindet sich die Verschleißgrenze, die um die maximal zulässige Abweichung xd gegenüber dem Referenzwert zum Bereichsende hin verschoben ist und bei deren Erreichen das Regelventil gewartet werden muß. In ähnlicher Weise wie bei der Schließstellung des Regelventils ist auch für die ganz geöffnete Stellung ein Toleranzband zwischen den Positionen x4 und x5 vorgesehen, innerhalb dessen sich die Endlage für ein geöffnetes Ventil befinden muß. Zum Ausgleich von Montageungenauigkeiten ist auch dieses Toleranzband von dem Bereichsende des Stellungsmelders, das sich bei der Position x6 befindet, entfernt.

Den Kern des Stellungsreglers 11 bildet eine Recheneinheit mit einem Mikrocontroller, der neben seinen Regelungsfunktionen auch eine Auswertung des Stellungssignals 10 zur Ableitung einer Qualitätsaussage durchführt. Die Qualitätsaussage kann beispielsweise in einer Angabe bestehen, wieviel Prozent der vorgebbaren Verschleißgrenze bereits durch den aktuell ermittelten Verschleißgrad erreicht sind. Bei Überschreiten der Verschleißgrenze wird zusätzlich eine Fehlermeldung an ein übergeordnetes Prozeßleitsystem ausgegeben.

In dem Ausführungsbeispiel ist ein pneumatisches Regelventil beschrieben; der Erfindungsgedanke ist ohne weiteres aber auch bei anderen Antriebsarten, beispielsweise hydraulischen oder elektromotorischen, sowie bei anderen Stellgliedern, beispielsweise Klappen, Schiebern oder Doppelsitzventilen, anwendbar.

## Patentansprüche

1. Verfahren zur Beurteilung des Verschleißgrades einer Ventildichtung, insbesondere des Ventilsitzes oder einer Weichdichtung, wobei das Ventil mit einem Stellungsregler für den Antrieb eines Stellglieds (17) versehen ist, dessen Verfahrweg durch zumindest eine Endlage begrenzt ist, die dem Schließzustand des Ventils entspricht, wobei der Stellungsregler
- einer Stellungsmelder (9) zur Erfassung der aktuellen Position des Antriebs und zur Erzeugung eines Stellungssignals (10) umfasst und
- mit einer Einrichtung (11), durch welche bei einer Inbetriebnahme die Endlage des Antriebs anfahrbar ist,
wobei das bei der Inbetriebnahme für die Endlage ermittelte Stellungssignal als Referenzwert (xi) abgespeichert wird, umfasst
**dadurch gekennzeichnet, dass** ein während des Betriebs bei der Endlage ermitteltes Stellungssignal mit dem Referenzsignal verglichen und bei Überschreiten einer vorgebbaren, maximal zulässigen Abweichung, die einer Vergrößerung des Verfahrweges über die Endlage hinaus entspricht, eine Qualitätsaussage "Stellglied schlecht" als Fehlermeldung angezeigt wird.

## Claims

1. Method for evaluating the degree of wear of a valve seal, particularly of the valve seat or of a compressive seal, the valve being provided with a positioner for the actuator of a final control element (17) whose travel is limited by at least one limit position which corresponds to the closed state of the valve, the positioner
- comprising a position transducer (9) for acquiring the current position of the actuator and for generating a position signal (10), and
- with a device (11) by means of which, upon a start-up, the limit position of the actuator can be approached, the position signal, determined upon the start-up for the limit position, being stored in memory as a reference value (xi),
**characterized in that** a position signal determined at the limit position during operation is compared with the reference signal and, upon exceeding of a predefinable, maximally permissible deviation which corresponds to an augmentation of the travel beyond the limit position, a quality indication "final control element defective" is displayed as a fault message.

## Revendications

1. Procédé pour estimer le degré d'usure d'une garniture de soupape, en particulier du siège de soupape ou d'une garniture souple d'étanchéité, la soupape étant munie d'un régulateur de position (17) pour entraîner un actionneur dont le déplacement est limité par au moins une fin de course qui correspond à l'état fermé de la soupape, le régulateur de position
• comprenant un afficheur de position (9) pour enregistrer la position courante de l'entraînement et pour produire un signal de position (10) et
• comprenant un dispositif (11) grâce auquel la fin de course de l'entraînement peut être lancée lors d'une mise en service, le signal de position, établi pour la fin de course lors de la mise en service, étant enregistré en tant que valeur de référence (xi),
**caractérisé en ce qu'**un signal de position, établi pendant le fonctionnement lors de la fin de course, est comparé avec le signal de référence et un affichage de la qualité indique "actionneur" en tant que message d'erreur lorsqu'est dépassé un écart maximal autorisé et pouvant être prescrit, qui correspond à une augmentation du déplacement au-delà de la fin de course.
